# EUROPEAN PATENT APPLICATION

(11) **EP 0 832 699 A1**
(43) Date of publication of application: **01.04.1998**
(21) Application number: 97202938.3
(22) Date of filing: 25.09.1997
(51) Int. Cl.: B09C 1/10, H05B 6/80

(54) **Process and installation for bio-dielectrically decontamination of contaminated soil**

(30) Priority: 26.09.1996 NL 1004114
(71) Applicant: N.V. Kema, 6812 AR Arnhem (NL)
(72) Inventor: Enoch, Gerrit Derk, 7623 JG Borne (NL); Jansen, Wilhelmus Joseph Laurentius, 6866 DR Heelsum (NL); Weultjes, Iwan Johannes Wilhelmus, 6132 ET Sittard (NL); van der Hoek, Eline Elisabeth, 6862 XT Oosterbeek (NL)
(74) Representative: Prins, Hendrik Willem

(57) **Abstract**

The invention relates to a process for decontaminating contaminated soil, wherein the soil is heated using dielectric heating means such that the soil temperature is adjusted to within the temperature range of 10°C - 50°C and to an installation for decontaminating soil, comprising dielectric heating means for arranging in the soil and soil temperature measuring means which are coupled to the dielectric heating means in order to adjust a soil temperature of 10°C - 50°C.

## Description

At this moment there is a great need for cleaning techniques, wherein contaminated soil can be decontaminated quickly and inexpensively. This decontamination can take place at a central location, but decontamination preferably occurs in situ. In situ ground decontamination is very attractive since the soil does not have to be excavated, placed and transported yet again after cleaning. This is particularly advantageous if, for instance because of building development, it is practically impossible to excavate the ground.

Biological soil decontamination usually has the drawback that the decontamination takes a very long time and it is not always possible to decontaminate to the required degree of decontamination in an acceptable time. This despite the fact that the activity of the micro-organisms present and the biological environment are naturally suited to this purpose.

In this respect the present invention has for its object to provide an improved process and installation for biological decontamination of contaminated soil.

This is achieved according to the invention with a process for decontaminating contaminated soil, wherein the soil is heated dielectrically using dielectric heating means such that the soil temperature is adjusted to within the temperature range of 10°C - 50°C, and by means of an installation for decontaminating soil, comprising dielectric heating means for arranging in the soil and soil temperature measuring means which are coupled to the dielectric heating means in order to adjust a soil temperature of 10°C - 50°C. The decontamination can take place in situ (without removal), on the site of the soil (after excavation but on site), or ex situ (elsewhere).

For the dielectric soil decontamination the dielectric heating means comprise electrodes for arranging in the soil whereby a high frequency electrical field can be applied between the electrodes in the soil. As a result of the dielectric properties of the soil (dielectric constant and dielectric loss angle) the soil is heated subject to the high frequency electrical field applied. Water present in the soil has a dielectric constant of ∈' = 78, which points to a high dipole character. The loss factor for water amounts to ∈" = 100 (at 27 MHz), whereby the water, and thereby the soil, can be heated rapidly. The loss factor must amount to a minimum of ∈" = 0.02. However, the loss factor of the soil can be increased by adding water thereto. By increasing the loss factor is thus achieved that the soil is easier to heat.

In the case microwave heating is used, the dielectric heating means comprise wave pipes from which the power is carried into the soil.

For the high frequency electrical field generated using a high frequency generator, frequencies can be used from for instance 6 to for instance 2450 MHz. Practical frequencies are 27 MHz and 6.8 MHz. Depending on the volume of the contaminated soil for cleaning and the dielectric loss factor, a power is used of up to for instance 2000 kW. Frequency and power are however so geared to one another and possibly even temporarily interrupted as to realize a temperature in the soil of 10°C to 50°C, since it has been found that at temperatures in this range micro-organisms present in or placed in the soil have an optimum decontaminating capacity. A temperature is generally chosen between 15°C and 40°C. A practical temperature range is 25°C to 35°C and generally suitable is a temperature of 30°C whereby an optimum is reached for heating and heat loss. However, it depends on the contaminated soil, the season, the degree and form of the contamination which temperature is finally selected.

Decontamination preferably takes place under aerobic conditions, whereby the cleaning takes place at the highest possible decontamination speed. A good parameter for adjusting and controlling of the aerobic conditions is a measurement of the amount of CO₂ production during the decontamination process. Anaerobic decontamination is however also possible, although in certain conditions this will entail a longer cleaning time.

It will be apparent that by means of the type of electrodes used and their placing in the soil relative to the contaminated soil, the high frequency electrical field can be transmitted and adapted locally, whereby the intended soil temperature is continuously adjustable. An earth electrode including an air gap can for instance be arranged relative to the contaminated soil, whereby the dielectric properties between the two electrodes is adjustable and therewith the soil temperature. In the case of in-situ control however, it is recommended to change the distance between the electrodes. Normally speaking, the electrodes are placed diametrically to one another in the contaminated soil, or placed in or just outside a container holding the contaminated soil. The electrodes can likewise be used for carrying oxygen into the soil in order to ensure and/or improve the aerobic conditions. It is likewise possible to carry the oxygen into the soil via a separate conduit system. The oxygen is to be obtained from an oxygen source. This can be atmospheric air containing oxygen or other forms of oxygen sources for the purpose of enabling very concrete adjustment of the aerobic conditions. In addition to or instead of oxygen, nutrients can also be carried into the soil via the electrodes.

It is optionally possible to arrange heat exchanging means in the soil for decontaminating in order to prevent excessive heating, so that local cooling is possible. These additional means may not consist of those materials which have an adverse effect on the electrical field for the dielectric heating.

Various types of soil can be decontaminated, to the extent that the soil as such and the contamination present therein can be decontaminated at all using micro-organisms present therein or organisms to be placed therein. The soil must for instance have a sufficient oxygen content and preferably have sufficient nutrients and/or added nutrients. The acidity must preferably lie in the range of 5 to 9, preferably 6 to 8. Finally, the contamination must not be present in a nature and form such that no micro-organisms are present at all.

The soil can for instance consist of clay soil, loamy soil, sandy soil and peaty soil.

Diverse types of contamination can be biologically decontaminated using the dielectric heating process according to the invention. It is possible to degrade polycyclic aromatic hydrocarbons in particular such as naphthalene, acenaphthylene, acenaphthene, fluorene, phenanthrene, anthracene, fluoranthene, pyrene, benz(a)anthracene, chrysene, benzo(b)fluoranthene, benzo (k) fluoranthene, benzo(a)pyrene, dibenz(ah)anthracene, benzo(ghi)perylene, indeno(123-cd)pyrene. In addition, volatile aromatics, benzene, toluene, ethyl benzene, o-xylene, p+m-xylene can be degraded. Finally, it is possible to degrade mineral oil, wherein for instance pristane and so-called C17 (unbranched C17 hydrocarbon) can be used as monitoring compounds.

In the reduction to practice of the process and/or installation according to the invention it may be necessary to shield the installation with a so-called "Faraday cage" in order to avoid interference from the radio network and ensure protection of the measuring equipment and surrounding area. Which type of "Faraday cage" must be used will depend on the configuration used.

Following below is an embodiment to which the invention must certainly not be deemed to be limited, in which the processes and installation according to the invention are further elucidated in addition to the diverse characteristics, including the claims.

Use is made of clayey soil (14% lutum, 54% silt and 32% sand), and of loamy soil (2% lutum, 30% silt and 68% sand). The clayey soil has a pH of 8.4, a dry matter content of 75% and an organic matter content of 6.9%. The loamy soil has a pH of 6.8, a dry matter content of 89% and an organic matter content of 1.5%. The degree of contamination is shown in the following table.

| **Concentrations of contamination in the used soils.** | | |
|---|---|---|
| contamination | clayey soil concentration (mg /kg ds) | loamy soil concentration (mg /kg ds) |
| naphthalene | 257 | >0.3 |
| acenaphthylene | 95 | <0.05 |
| acenaphthene | 92 | <0.05 |
| fluorene | 210 | 0.07 |
| phenanthrene | 560 | 0.19 |
| anthracene | 180 | 0.13 |
| fluoranthene | 180 | 0.06 |
| pyrene | 202 | 0.19 |
| benz(a)anthracene | 47 | 0.11 |
| chrysene | 43 | 0.18 |
| benzo(b)fluoranthene | 28 | 0.12 |
| benzo(k)fluoranthene | 14 | <0.05 |
| benzo(a)pyrene | 24 | 0.07 |
| dibenz(ah)anthracene | 10 | <0.05 |
| benzo(ghi)perylene | 14 | 0.07 |
| indeno(123-cd)pyrene | 9.6 | 0.06 |
| benzene | <0.1 | <0.1 |
| toluene | 0.18 | <0.1 |
| ethyl benzene | 22 | <0.1 |
| o-xylene | 1.6 | <0.1 |
| p+m-xylene | 0.91 | <0.1 |
| mineral oil | 5500 | 490 |
| pristane | 35 | 7.1 |
| C17 | 28 | 9.6 |

For both these types of contaminated soil the concentration of manure is further given in mg/kg ds. The clayey soil contained less than 5 mg/kg ds nitrate, 2300 mg/kg ds P₂O₅ and 1400 mg/kg ds Kjeldahl nitrogen. For the loamy soil the respective values were less than 5 mg/kg ds nitrate, 600 mg/kg ds P₂O₅ and 600 mg/kg ds Kjeldahl nitrogen. This meant a deficiency of phosphorus in the loamy soil, so that 25 grams of phosphorus was added to the loamy soil per ton of contaminated soil in order to obtain an optimum manure concentration for the micro-organisms present therein.

The soil was provided with electrodes and a high frequency electrical field (power 10 kW frequency 27 MHz) was applied between the electrodes. In order prevent the temperature from rising too high, certainly in the clayey soil, use is made of an adjustable earth electrode wherein an air gap could be realized between the earth electrode and the adjoining soil. In order to maintain a soil temperature of 30°C, the temperature sensor placed in the soil is coupled in another variant to the power control of the high frequency generator. Continuous power control was thus necessary. A simple, practical solution consists of coupling the temperature sensors to an on/off circuit for the high frequency generator. With the described arrangement it is possible to adjust a soil temperature with a temperature distribution for the clayey soil of ≤ 1°C and for the loamy soil of ≤ 2°C.

At 30°C the biological activity during the decontamination process, measured on the basis of the amount of CO₂ produced in milligrams per gram of dry matter in 48 hours, amounted to 0.6 for the clayey soil and 1.4 for the loamy soil.

Oxygen, in the form of air, was added to an extent such that an anaerobic degradation (measured by the formation of methane) was negligible (7.3 microgram methane per litre).

After 40 days of soil decontamination by means of this electric heating to a temperature of 30°C, samples were taken for the different single and multiple polycyclic aromatic hydrocarbons (PAHs), the volatile aromatics and the mineral oil precursors. After 40 days the single PAHs were found to be degraded to an average of 70%. The multiple PAHs were found to be degraded for 10%-70%.

For the mineral oil the decrease of pristane and C17 amounted to an average 50% to 70%.

## Claims

1. Process for decontaminating contaminated soil, wherein the soil is heated dielectrically using dielectric heating means such that the soil temperature is adjusted to within the temperature range of 10°C - 50°C.

2. Process as claimed in claim 1, wherein the temperature range amounts to 15°C - 40°C, preferably 25°C - 35°C, such as 30°C.

3. Process as claimed in claim 1 or 2, wherein oxygen is introduced into the soil in order to maintain aerobic conditions in the soil.

4. Process as claimed in claim 3, wherein the oxygen is introduced into the soil via the dielectric heating means.

5. Process as claimed in claims 1-4, wherein manures are introduced into the soil, preferably via the dielectric heating means.

6. Process as claimed in claims 1-5, wherein water is added to the soil to increase the dielectric loss factor of the soil.

7. Process as claimed in claims 1-6, wherein the dielectric heating means comprise slidable and/or adjustable electrodes with which the desired soil temperature is adjustable subject to local differences in dielectric properties of the soil.

8. Process as claimed in claims 1-7, wherein the soil is decontaminated in-situ, on-site or ex-situ.

9. Process as claimed in claims 1-8, wherein decontamination takes place under anaerobic conditions.

10. Process as claimed in claims 1-9, wherein the dielectric heating means comprise microwave wave pipes.

11. Installation for decontaminating soil, comprising dielectric heating means for arranging in the soil and soil temperature measuring means which are coupled to the dielectric heating means in order to adjust a soil temperature of 10°C - 50°C.

12. Installation as claimed in claim 11, wherein the dielectric heating means comprise a high frequency generator to which the soil temperature measuring means are connected.

13. Installation as claimed in claim 11 or 12, wherein the dielectric heating means comprise microwave wave pipes.

14. Installation as claimed in claims 11-13, wherein the dielectric heating means comprise slidable and/or adjustable electrodes.

15. Installation as claimed in claims 11-14, wherein the dielectric heating means comprise hollow electrodes which are connected to an oxygen source.

16. Installation as claimed in claims 11-15, which is provided with a "Faraday cage".

17. Process as claimed in claims 1-10 and/or installation as claimed in claims 11-16, wherein the contaminated soil contains an organic contaminant such as polycyclic aromatic hydrocarbons, volatile aromatics and/or mineral oil.
